# EUROPÄISCHE PATENTSCHRIFT

(11) **EP 1 940 609 B1**
(45) Veröffentlichungstag und Bekanntmachung des Hinweises auf die Patenterteilung: **06.08.2014**
(21) Anmeldenummer: 06793702.9
(22) Anmeldetag: 21.09.2006
(51) Int. Cl.: B32B 5/18, C08J 9/36, C08J 9/00, C08L 23/10

(54) **KUNSTSTOFF-SCHAUMMATERIAL UND DESSEN VERWENDUNG**
PLASTIC FOAM MATERIAL AND USE THEREOF
MATIERE PLASTIQUE EXPANSEE ET SON UTILISATION

(30) Priorität: 21.10.2005 DE 102005050524
(43) Veröffentlichungstag der Anmeldung: 09.07.2008
(73) Patentinhaber: Benecke-Kaliko AG, 30419 Hannover (DE)
(72) Erfinder: BÜHRING, Jürgen, 73033 Göppingen (DE); MARQUARDT, Jürgen, 79104 Freiburg (DE)
(74) Vertreter: Finger, Karsten
(86) Internationale Anmeldenummer: PCT/EP2006/066579
(87) Internationale Veröffentlichungsnummer: WO 2007/045536

(56) Entgegenhaltungen:
- EP-A1- 0 704 476
- EP-A1- 0 997 493
- EP-A2- 0 190 021
- WO-A2-2005/111125
- US-A- 3 950 278
- US-B1- 6 417 240
- DATABASE CA [Online] CHEMICAL ABSTRACTS SERVICE, COLUMBUS, OHIO, US; YAMAGATA, KAZUO ET AL: "Olefin polymer compositions and crosslinked olefin resin foam products with good heat resistance, workability, and resiliency" XP002407410 gefunden im STN Database accession no. 1996:546089 -& JP 08 143694 A (SEKISUI CHEMICAL CO. LTD., JAPAN) 4. Juni 1996 (1996-06-04)
- ULRIKE WENZEL: 'Charakterisierung eines ultrahochmolekularen Polymethacrylats mit flüssigkristalliner Seitengruppe in verdünnter Lösung', [Online] Bd. D83/2000, 05 Juli 2000, Seite 78PP, XP007912815 DISSERTATION, Gefunden im Internet: <URL:http://opus.kobv.de/tuberlin/volltexte /2000/171/pdf/wenzel_ulrike.pdf> [gefunden am 2010-04-26]

## Beschreibung

Die Erfindung betrifft ein Kunststoff-Schaummaterial auf der Basis von Polyolefinen, enthaltend mindestens 50 Gew.-% zumindest eines Polypropylens und/oder zumindest eines Copolymers aus Propylen und zumindest einem anderen ungesättigten Comonomer, wobei das Polypropylen und/oder das Copolymer aus Propylen und zumindest einem anderen ungesättigten Comonomer einen Schmelzflussindex MFI (230°C/2,16 kg) von 0,5 bis 12 g/10 min aufweist, und mindestens 10 Gew.-% zumindest eines Copolymers aus Ethylen und zumindest einem anderen ungesättigten Comonomer, wobei das Copolymer aus Ethylen und zumindest einem anderen ungesättigten Comonomer einen Schmelzflussindex MFI (190°C/2,16 kg) von < 2g/10 min aufweist, und zumindest eines der Copolymere aus Ethylen und zumindest einem anderen ungesättigten Comonomer als Comonomer ein α-Olefin enthält, 0,3 bis 5 Gew.-%, bezogen 0,3 bis 5 Gew.-%, bezogen auf das Kunststoff-Schaummaterial, inneren und/oder äußeren Gleitmitteln, wobei die inneren Gleitmittel ausgewählt sind aus Köhlenwasserstoffwachsen mit einem Schmelzbereich von 110 bis 160 °C, Alkali- und Erdalkalimetall-Salzen der Stearinsäure, der Palmitinsäure oder der Ölsäure sowie den Amiden und Estern der genannten Säuren oder Mischungen aus den genannten Substanzen und die äußeren Gleitmittel ausgewählt sind aus metallseifen-haltigen Kombinationsgleitmitteln, und mit anschließender Vernetzung mit einer ionisierenden Strahlungsquelle,wobei das Kunststoff-Schaummaterial eine Dichte von 0,03 bis 0,2 g/cm³ und einen vernetzten Polyolefinanteil von 20-70 Gew.-% aufweist und wobei der Comonomeranteil zumindest eines der Copolymere aus Ethylen und zumindest einem anderen ungesättigten Comonomer 8 bis 40 Gew.-% beträgt. Ferner betrifft die Erfindung die Verwendung des Kunststoff-Schaummaterials in Flugzeugen, in Kraftfahrzeugen, insbesondere für Kraftfahrzeuginnenverkleidungen oder- verkleidungsteile.

Kunststoff-Schaummaterialen ähnlich der vorgenannten Art sind aus der deutschen Patentanmeldung mit der Anmeldenummer DE 10 2004 025 157.6 bekannt. Das in dieser Schrift genannte, auf Polyolefinen basierende Kunststoff-Schaumaterial enthält als Polyolefine auf Polypropylen und auf Polyethylen basierende Kunststoffe, wobei der auf Polyethylen basierende Kunststoff einen Schmelzflussindex MFI (190 °C/2,16 kg) von weniger als 2 g/10 min und mehr als 0,5 g/10 min aufweist. Als auf Polyethylen basierende Kunststoffe werden solche in Form von Polyethylen und /oder eines Copolymers von Ethylen mit einem anderen ungesättigten Comonomer, insbesondere einem α-Olefin vorgeschlagen. Zu den bevorzugten ungesättigten Comonomeren zählen Buten, Hexen und Octen. Über den Gehalt an Comonomer im auf Polyethylen basierenden Kunststoff findet man in der DE 10 2004 025 157.6 keine Angaben. Die in den Ausführungsbeispielen verwendeten Polyethylen-Copolymere enthalten ≤ 5 Gew.-% an ungesättigtem Comonomer. Das Kunststoff-Schaummaterial lässt sich vorteilhaft zur Herstellung von Innenverkleidungen von Kraftfahrzeugen und dergleichen einsetzen.

Ferner wird in der EP 0 704 476 B 1 ein Kunststoff-Schaummaterial beschrieben, das aus einer auf Polyolefin basierenden Zusammensetzung besteht, welche wiederum besteht aus: zwischen 40 und 95 Gew. -% von auf Polypropylen basierenden Kunststoffen mit einem Schmelzflussindex (MFI) von 0,05 bis 12 g/10 min, zwischen 5 und 60 Gew.-% von auf Polyethylen basierenden Kunststoffen mit einem Schmelzindex (MFI) von 2 bis 50 g/10 min. Das Kunststoff-Schaummaterial enthält zwischen 20 und 65 Gew.-% vernetzten Anteil und hat eine Dichte von 0,02 bis 0,2 g/cm³. Der vernetzte Anteil soll zu 55 bis 95 Gew.-% aus vernetztem Polypropylen und zu 5 bis 45 Gew.-% aus vernetztem Polyethylen bestehen.
In allgemeiner Form wird ein derartiges Kunststoffmaterial wie folgt hergestellt: Es werden etwa 40 bis 95 Gew.-% eines auf Polypropylen basierenden Kunststoffes (darunter werden Polymere verstanden, deren Gewichtsanteil an Propylen > 50 Gew.-% ist) und etwa 5 bis 60 Gew.-% eines auf Polyethylen basierenden Kunststoffes (darunter werden Polymere verstanden, deren Gewichtsanteil an Ethylen > 50 Gew.-% ist) mit einem Vernetzungsmittel und einem Schaummittel zur Herstellung der Kunststoffzusammensetzung gemischt. Hieraus wird z. B. durch Extrusion eine Folie hergestellt. Diese wird einer ionisierenden Strahlungsquelle ausgesetzt, um eine vernetzte Folie zu erhalten. Die Dosierung der ionisierenden Strahlungsquelle soll 1,0 bis 6,0 Mrad bei einer Beschleunigungsspannung von 700 kV betragen. Die ionisierende Behandlung wird so lange fortgeführt, bis der vernetzte Anteil in der Kunststoffzusammensetzung 20 bis 65 Gew.-% beträgt. Es schließt sich ein Erhitzen der vernetzten Kunststofffolie an, um ein Kunststoff-Schaummaterial in einer Dichte von 0,02 bis 0,2 g/cm³ zu erhalten. Dies kann in einem üblichen Schäumungsofen bei einer Temperatur von etwa 250 °C erfolgen, wodurch das einbezogene Schaummittel thermisch zersetzt wird, um das Kunststoff-Schaummaterial entstehen zu lassen.

Gemäß der EP 0 704 476 B1 soll ein Kunststoff-Schaummaterial mit überlegenen Verformungseigenschaften hergestellt werden, das sich gut auf die Oberfläche von Substraten aufbringen lässt, eine überlegene Hitzebeständigkeit und verbesserte Sekundärbehandlungseigenschaften aufweist. Nach der Offenbarung der EP 0 704 476 B 1 müssen hierzu die bezeichneten Rahmenbedingungen strikt eingehalten werden. Dies gilt insbesondere für den MFI-Wert des auf Polyethylen basierenden Kunststoffs. So sollen dann nachteilige Effekte im Hinblick auf das Verformungsverfahren auftreten, wenn der MFI-Wert des auf Polyethylen basierenden Kunststoffs unter 2 g/10 min fällt. Es soll dann nicht möglich sein, aus dem Kunststoff-Schaummaterial die wünschenswerten Produkte herzustellen. Darüber hinaus soll die Extrusion des Kunststoff- Schaummaterials weitgehend unmöglich sein, wenn der MFI-Wert des auf Polyethylen basierenden Kunststoffs unter dem angegebenen kritischen Wert von 2 g/10 min liegt. Ein MFI-Wert von etwa 2 g/10 min soll insbesondere das umfassende Erscheinungsbild des Kunststoff-Schaummaterials beeinträchtigen. Darüber hinaus soll die Kompatibilität zwischen dem Polyethylen und dem Polypropylen bzw. einem darauf basierenden Material beeinträchtigt werden. Der EP 0 704 476 B 1 lassen sich demzufolge strikte Hinweise dahingehend entnehmen, dass der MFI- Wert des herangezogenen Polyolefins oder Copolymers von Polyolefin zur Herstellung des bekannten Kunststoff-Schaummaterials nicht unter 2 g/10 min zu senken ist, da dann nicht das gewünschte Produkt entsteht.
Bei dem auf Polyethylen basierenden Kunststoff kann es sich um Copolymere aus Ethylen und einem anderen Monomer (z. B. einem α-Olefin, Acrylsäure oder Vinylacetat) handeln. Über den Gehalt an Comonomer im auf Polyethylen basierenden Kunststoff werden keine Aussagen gemacht und die Beispiele zeigen nur Polyethylene ohne weiteres Comonomer. Die in der DE 10 2004 025 157.6 und der EP 0 704 476 B1 offenbarten Schaummaterialien zeichnen sich jedoch durch eine verglichen mit Polyethylenschäumen deutlich erhöhte Materialhärte aus.

Die DE 198 40 203 A1 beschreibt ein Verfahren zu Herstellung von Polyolefinschäumen mit teilweise aufgebrochener Zellstruktur. Diese wird erreicht, indem der geschlossenzellige Polyolefinschaum durch mindestens ein Walzenpaar geführt wird, wobei die Umfangsgeschwindigkeiten der Walzen unterschiedlich sind, wodurch der geschlossenzellige Schaum im Walzenspalt sowohl einer Kompression als auch einer Scherung unterworfen wird. Durch das partielle Aufbrechen der Zellstruktur wird ein verbessertes Rückstellverhältnis und eine verbesserte Weichheit (geringere Härte) des Schaummaterials erreicht. Problematisch bei dieser Art der Verbesserung der Schaumweichheit ist jedoch die Reduktion der Schaumdehnung im Bereich der üblichen Verarbeitungstemperaturen, so dass die Verarbeitbarkeit im Verformungsprozess negativ beeinflusst wird.

Der Erfindung liegt daher die Aufgabe zu Grunde, ein Kunststoff-Schaummaterial bereitzustellen, dass sich durch eine geringere Härte auszeichnet, ohne dass die Verarbeitbarkeit im Verformungsprozess sowie die Temperaturbeständigkeit negativ beeinflusst werden.

Gelöst wird die Aufgabe dadurch, dass bei dem Kunststoff-Schaummaterial der eingangs genannten Art der Comonomeranteil zumindest eines der Copolymere aus Ethylen und zumindest einem anderen ungesättigten Comonomer 8 bis 40 Gew.-% beträgt.

Es hat sich überraschenderweise gezeigt, dass sich bei Einsatz von Polypropylen und/oder Copolymeren aus Propylen und einem weiteren ungesättigten Comonomer in Kombination mit dem speziellen Copolymer aus Ethylen und einem weiteren ungesättigten Comonomer, das einen Comonomenanteil zwischen 8 bis 40 Gew.-% und gleichzeitig einen MFI (190 °C/2,16 kg,) < 2g/10 min aufweist, Kunststoff-Schaummaterialien hergestellt werden können, die sich durch eine hohe Schaumweichheit auszeichnen und bei denen aber die von reinen Polypropylen-Schäumen bekannte gute Verarbeitbarkeit im

Verformungsprozess sowie die erhöhte Temperaturbeständigkeit nicht negativ beeinflusst werden.

Gemäß einer vorteilhaften Weiterbildung der Erfindung entfallen vom vernetzten Polyolefinanteil 50-95 Gew.-% auf das oder die Polypropylen(e) und/oder das oder die Propylencopolymer(e) und 5-50 Gew.-% auf das oder die Ethylencopolyrner(e). Übersteigt der Anteil an Polypropylen und/oder Propylencopolymer 95 Gew.%, ist das Material zu hart und spröde und die gewünschten Vernetzungsdichten könnten nicht erreicht werden. Wird mehr als 50 Gew.-% Ethylencopolymer eingesetzt, haben die erzielten Kunststoff-Schaummaterialien keine ausreichende Temperaturbeständigkeit. Ein besonders bevorzugter Rahmen liegt zwischen 60 und 80 Gew.-% Polypropylen und/oder Propylencopolymer und 40 bis 20 Gew.-% Ethylencopolymer. Der hierfür geltende Gesamtrahmen ist mit 20 bis 70 Gew.-% vernetztem Polyolefinanteil im Schaummaterial wesentlich. Hier gilt als bevorzugter Rahmen für das Kunststoff-Schaummaterial 30 bis 60 Gew.-% an vernetztem Polyolefinanteil.

Zur Bestimmung des vernetzten Anteils des Polyolefins des Kunststoff-Schaummaterials ist es üblich, den entsprechenden Gelgehalt zu ermitteln, indem der vernetzte Polymeranteil mit Hilfe einer Xylol-Extraktion bestimmt wird. Dies erfolgt bei einer Temperatur von 145 °C. Der vernetzte unlösliche Anteil kann nach Trocknung auf die eingewogene Menge Schaum bezogen werden. Die prozentuale Aufteilung der Anteile an Polypropylen und/oder Propylencopolymer und Ethylencopolymer im vernetzten Polyolefinanteil werden in der Regel wie folgt durchgeführt: Der nach der Xylol-Extraktion erhaltene Rückstand wird der C¹³-Kernresonanz-Spektrokopie zugeführt und die Menge an tertiären C-Atomen, wie sie im Polypropylen anzutreffen sind, quantitativ im unlöslichen und getrockneten Gel-Rückstand des Kunststoff-Schaummaterials bestimmt. Zweckdienlicherweise werden dabei Eichkurven, erstellt aus den eingesetzten Ausgangsmaterialien, mit verwendet.
Die prozentuale Aufteilung der Anteile an Polypropylen und/oder Propylencopolymer und Ethylencopolymer kann auch gaschromatographisch erfasst werden, indem eine Hydrierung und eine Thermozersetzungstechnik durchgeführt wird. Der nach der Xylol-Extraktion erhaltene Rückstand wird thermisch bei 700 °C zersetzt. Wasserstoffgas wird dann eingeleitet, um das thermisch zersetzte Gas zu hydrieren. Das hydrierte Gas wird mittels eines Gaschromatographen analysiert. Diese Methode ist aber im Vergleich zur Bestimmung mit C¹³-NMR mit einer deutlich größeren Ungenauigkeit behaftet.

Ist im Kunststoff-Schaummaterial ein Copolymeren aus Propylen und einem weiteren ungesättigten Comonomer enthalten, handelt es sich bevorzugt um ein α-Olefin, insbesondere Etyhlen oder 1-Buten, wobei der Comonomeranteil bis zu 50 Gew.-% betragen kann. Der Schmelzflussindex MFI (230 °C/ 2,16 kg) liegt zwischen 0,5 und 12 g/10 min, vorzugsweise zwischen 5 und 10 g/10 min). Das Gewichtsmittelmolekulargewicht M_{w} zumindest eines Polypropylens und/oder zumindest eines der Polypropylencopolymere ist vorteilhafter Weise < 250000 g/mol, vorzugsweise < 230000 g/mol. Diese Polypropylene und/oder Polypropylencopolymere ermöglichen die leichtere Einarbeitung von festen und flüssigen Kunststoff-Additiven. Werden mehrere Polymere des vorgenannten Typs eingesetzt, so ist es möglich, dass alle oder nur einige, ggf. nur eines, der verwendeten Polymere ein Gewichtsmittelmolekulargewicht M_{w} von < 250000 g/mol aufweisen bzw. aufweist.

Bei den für das Kunststoff-Schaummaterial einsetzbaren Copolymeren aus Ethylen und zumindest einem anderen ungesättigten Comonomer handelt es sich um solche, deren Schmelzflussindex MFI (190 °C/2,16 kg) kleiner als 2 g/10 min ist. Bevorzugt ist der Schmelzflussindex MFI (190 °C/2,16 kg) kleiner als 1,5 g/10 min, insbesondere ≤ 1 g/10 min. Der Comonomeranteil zumindest eines der verwendeten Copolymeren aus Ethylen und zumindest einem anderen ungesättigten Comonomer beträgt 8 bis 40 Gew.-%, insbesondere 10 bis 25 Gew.-%. Neben dem Copolymer mit einem solchen Comonomeranteil können in dem Kunststoff-Schaummaterial noch weitere Copolymere enthalten sein, deren Comonomeranteil kleiner als 8 Gew.-% ist. Wichtig ist nur, dass zumindest eines der eingesetzten Copolymere aus Ethylen und zumindest einem anderen ungesättigten Monomer einen Comonomeranteil von mehr als 8 Gew.-% aufweist.

Bei den im Copolymeren aus Ethylen und zumindest einem anderen ungesättigten Comonomer vorhandenen Comonomer kann es sich um unterschiedlichste Comonomere handeln, wobei jedoch zumindest eines der Copolymere aus Ethylen und zumindest einem anderen ungesättigten Comonomer als Comonomer ein α-Olefin enthalten muss. Als α-Olefine können vorzugsweise 1-Octen, 1 Buten, 1-Hexen oder 4-Methyl-1-Penten, eingesetzt werden. Zusätzlich können im erfindungsgemäßen Kunststoff-Schaummaterial Copolymere aus Ethylen und einem anderen ungesättigten Comonomer enthalten sein, bei dem es sich bei dem Comonomer um Ester der Acryl- oder Methacrylsäure handelt. Auch der Einsatz von Vinylestern der Essigsäure als Comonomer kommt in Frage. Eine besonders geringe Härte des Schaummaterials kann erreicht werden, wenn das Kunststoff-Schaummaterial zumindest zwei Copolymere aus Ethylen und zumindest einem anderen ungesättigten Comonomer enthält, wobei das eine Copolymer als Comonomer ein α-Olefin, insbesondere 1-Octen, und das andere Copolymer als Comonomer Vinylacetat aufweist.

In dem erfindungsgemäßen Kunststoff-Schaummaterial liegen Polypropylen und/oder Copolymer aus Propylen und zumindest einem anderen ungesättigten Comonomer sowie Copolymer aus Ethylen und zumindest einem anderen ungesättigten Comonomer, das zumindest ein Copolymer aus Ethylen und einem α-Olefin enthält, gleichzeitig vor, dabei hat sich gezeigt, dass das Polypropylen und/oder Copolymer aus Propylen und zumindest einem anderen ungesättigten Comonomer eine kontinuierliche Matrix (Phase) bildet, während das Copolymer aus Ethylen und zumindest einem anderen ungesättigten Comonomer, das zumindest ein Copolymer aus Ethylen und einem α-Olefin enthält, eine darin dispergierte Phase bildet.

Um die Dispersion des Copolymer aus Ethylen und zumindest einem anderen ungesättigten Comonomer, das zumindest ein Copolymer aus Ethylen und einem α-Olefin enthält, in der kontinuierlichen Matrix zu verbessern, hat es sich als vorteilhaft erwiesen, wenn eine phasenvermittelnde Komponente, beispielsweise Blockcopolymere aus Polypropylen und Polyethylen, zugesetzt wird, die es erlaubt, eine durchschnittliche Domänengröße der dispergierten Phase von < 9 µm², bevorzugt < 7 µm², besonders bevorzugt < 5 µm², herzustellen.

Das Kunststoff-Schaummaterial kann bzw. muss verschiedene Kunststoff-Additive, wie Vernetzungshilfsmittel, thermisch zersetzbare Schaummittel, Antioxidationsmittel, Lichtschutzmittel, Pigmente, und/oder Füllstoffe, enthalten. Diese können bereits den unterschiedlichen Ausgangspolymeren beigemischt sein, werden jedoch meistens bei der Herstellung der Polymermischung hinzugegeben.

Werden Vernetzungshilfsmittel eingesetzt, werden diese bevorzugt ausgewählt aus Divinylbenzol, Ethylvinylbenzol, Trimethylolpropantriacrylat, Trimethylolpropantrimethacrylat, 1,6-Hexandioldiacrylat, 1,2,4-Triallyl-trimellitat und/oder Triallylisocyanurat.

Für die Zwecke der Erfindung ist es erforderlich, dass bei der Herstellung des angestrebten Kunststoff-Schaummaterials ein thermisch zersetzbares Schaummittel eingebunden ist. Hierbei handelt es sich vorzugsweise um ein Azodicarbonamid, Benzolsulfonylhydrazid und/oder Toluolsulfonylhydrazid.

Als Antioxidantien können Phenolderivate, Lactone und/oder Phosphite und als Lichtschutzmittel sterisch gehinderte Amine oder Benzotriazine eingesetzt werden.

Enthält das Kunststoff-Schaummaterial Füllstoff und/oder Pigmente, handelt es sich insbesondere um solche in Form von Kaliumaluminiumsilikat, Talkum, Kreide, Kaolin, Metalloxiden, insbesondere Titandioxid, und/oder Ruß.

Für das erfindungsgemäße Kunststoff-Schaummaterial hat es sich als erforderlich erwiesen, dass es ein Gleitmittel enthält. Hierbei kann es sich um ein inneres oder ein äußeres Gleitmittel handeln. Es ist aber auch möglich, dass inneres und äußeres Gleitmittel gleichzeitig eingesetzt werden.

Das innere Gleitmittel ist dabei ausgewählt aus Kohlenwasserstoffwachsen mit einem Schmelzbereich von 110 bis 160 °C, Alkali- und Erdalkalimetall-Salzen der Stearinsäure, der Palmitinsäure oder der Ölsäure sowie den Amiden und Estern der genannten Säuren oder Mischungen aus den genannten Substanzen. Als besonders vorteilhafte innere Gleitmittel haben sich hochschmelzende Paraffinwachse, insbesondere auf der Basis von Polypropylen oder Polyethylen, erwiesen. Diese Gleitmittel greifen nicht mit in Vernetzungsreaktion ein und verbessern die Einarbeitung von festen (pulverförmigen) und flüssigen Kunststoff-Additiven.

Das äußere Gleitmittel ist ausgewählt aus metallseifen-haltigen Kombinationsgleitmitteln, wie festen, metallseifen-haltigen Kombinationsgleitmitteln mit hochmolekularen Anteilen und einem Fließ-Schmelzpunkt von 105 bis 115 °C.

Das oder die Gleitmittel (inneres und/oder äußeres) ist bzw. sind in Mengen von 0,3 bei 5 Gew.-%, vorzugsweise von 0,3 bis 2 Gew.-%, im Kunststoff-Schaummaterial enthalten.

Der Einsatz der vorgenannten Gleitmittel trägt dazu bei, dass ein Copolymer aus Ethylen und zumindest einem anderen ungesättigten Comonomer mit einem Schmelzflussindex MFI (190 °C/2,16 kg) von < 2 g/10 min ohne große verfahrenstechnische Beeinträchtigungen verarbeitet werden kann. Durch den Einsatz von Gleitmitteln im Polymercompound, bei dem neben einem Polypropylen ein Ethylencopolymer mit hohem Molekulargewicht (kleiner MFI) eingesetzt wird, kann der Energieeintrag bei der Extrusion so weit reduziert werden, dass die Materialtemperatur des Compounds unter 190 °C gehalten werden kann. Damit kann die vorzeitige Zersetzung von vorhandenen Kunststoff-Additiven wie thermisch empfindlichen Treibmitteln (z. B. Azodicarbonamid) bei der Extrusion verhindert werden. Die Schmelz- und Mischzonen sollten dabei im Extruder so ausgelegt werden, dass ein ausreichendes und sicheres Aufschmelzen des beigesetzten Granulats erzielt und die Misch- und Schmelzenergie so begrenzt wird, dass eine sichere Temperaturkontrolle des Compounds gewährleistet ist.

Die Herstellung des erfindungsgemäßen Kunststoff-Schaummaterials erfolgt nach dem Fachmann bekannten Verfahren, dabei wird in der Regel zunächst aus den Ausgangsmaterialien beispielsweise durch Extrusion eine Folie oder ein anderes Formteil hergestellt. Es schließt sich die Vernetzung mit einer ionisierenden Strahlungsquelle, insbesondere in Form einer Elektronenstrahlungsquelle, an. Das Kunststoff-Schaummaterial lässt sich vorteilhaft zu Dekorlaminaten mit genarbter Deckfolie verarbeiten. Diese Laminate werden im Allgemeinen über den Tiefziehprozess zu Dekoroberflächen von Bauteilen verarbeitet. Sie können aber auch in geeigneten Werkzeugen zur Bauteilherstellung unterpresst oder mit thermoplastischen Materialien hinterspritzt werden.

Das erfindungsgemäße Kunststoff-Schaummaterial ist besonders für die Herstellung von Schaumlaminaten, die in Flugzeugen und Kraftfahrzeugen als Oberflächenmaterial für Innenverkleidungen, insbesondere Schalttafeln oder Armaturenbrettern, Säulen, Kraftfahrzeugseitenverkleidungen, -türverkleidungen, -ablagen eingesetzt werden, geeignet. Die Verarbeitung erfolgt entweder über eine Tiefzieh-, einen Hinterspritz- oder einen Hinterpressprozess. Dabei hat es sich gezeigt, dass das erfindungsgemäße Schaummaterial gegenüber den Produkten aus dem Stand der Technik geringere Härte, d. h. eine höhere Weichheit, aufweist, wie die nachfolgenden Vergleichsversuche zeigen. Dies hat z. B. auch eine angenehmere Haptik der aus dem Kunststoff-Schaummaterial hergestellten Laminate zur Folge. Die Temperaturbeständigkeit der Laminate wird gleichzeitig nicht negativ beeinflusst.

Die Erfindung wird nun anhand von Ausführungsbeispielen näher erläutert. Dazu wurden Kunststoff-Schaummaterialien gemäß folgender Beschreibung hergestellt:

Die in der folgenden Tabelle 1 formulierten Zusammensetzungen mit den Mengen der Substanzen in Gewichtsteilen wurden mit Hilfe eines Zweiwellenextruders jeweils zu Folien der Dicke 1 mm extrudiert. Diese wurden durch Einwirkung von Elektronenstrahlen eines β-Strahlers mit einer Beschleunigungsspannung von 850 kV vemetzt. Die Oberflächendosis betrug jeweils 37 kGy. Es schloss sich bei 270 °C das Aufschäumen des vernetzten Kompaktfolienmaterials in einem Heißluftofen an.

**Tabelle 1: Folienzusammensetzungen**

| Substanz | Vergleichsbeispiel | Beispiel 1 | Beispiel 2 | Beispiel 3 | Beispiel 4 (Referenz) |
|---|---|---|---|---|---|
| PP1 | 35 | 35 | 30 | 35 | |
| PP2 | 35 | 30 | 35 | 25 | 38 |
| PE1 | 30 | | 15 | 20 | 30 |
| PE2 | - | 35 | 20 | 20 | 22 |
| EVA | - | - | - | - | 10 |
| ADC | 8,5 | 8,5 | 8,5 | 8,5 | 8,5 |
| GM1 | 1,0 | 1,0 | 1,0 | 1,0 | 1,0 |
| GM2 | 1,0 | 1,0 | 1,0 | 1,0 | 1,0 |
| VHM | 2,0 | 2,0 | 2,0 | 2,0 | 2,0 |

| | | | | | |
|---|---|---|---|---|---|
| PP 1 stat. Copolymer aus Polypropylen mit 3 Gew. % Ethylen mit MFI (230 °C/2,16 kg) = 6 g/10 min, M_{w} = 400000 g/mol PP 2 stat. Copolymer aus Polypropylen mit 2 Gew. % Ethylen mit MFI (230 °C/2,16 kg) = 8 g/10 min, M_{w} = 225000 g/mol PE 1 LLDPE (Linear Low Density Polyethylene) mit 5 Gew. % 1- Octen mit MFI (190 °C/2,16 kg) = 1 g/10 min PE 2 LLPDE (Linear Low Density Polyethylene) mit 19 Gew % 1- Octen mit MFI (190 °C/2,16 kg) = 1 g/10 min EVA Copolymer aus Ethylen und Vinylacetat mit 17 Gew. % Vinylacetat und MFI (190 °C/2,16 kg) = 1,5 g/10 min ADC Schaummittel Azodicarbonamid GM 1 Gleitmittel 1, hochmolekularer Komplex, Fließschmelzpunkt 105 - 115 °C, Säurezahl < 12 GM 2 Gleitmittel 2, Hartparaffinwachs mit Fließschmelzpunkt 104 - 110 °C, Säurezahl < 1 VHM Vernetzungshilfsmittel Triallylisocyanurat | | | | | |

In der folgenden Tabelle 2 werden die Schaumeigenschaften der erhaltenen Kunststoff-Schaummaterialien dargestellt:

**Tabelle 2**

| Eigenschaft | Vergleichsbsp. | Bsp. 1 | Bsp. 2 | Bsp.3 | Bsp. 4 (Referenz) |
|---|---|---|---|---|---|
| Stauchhärte nach 1 Zyklus, 50 % Stauchung ISO 844 [KPa] | 270 | 180 | 215 | 200 | 160 |
| Shore 00 | 83 | 77 | 80 | 78 | 73 |
| Tiefziehfähigkeit (kleine Dachform) | i. O. | i. O. | i. O. | i. O. | i. O. |
| Dichte [g/l] | 65 | 67 | 67 | 66 | 63 |
| Gelgehalt (%) | 60 | 48 | 50 | 51 | 55 |
| Lagerung 500 h bei 120 °C | Kein Schaumkollaps | Kein Schaumkollaps | Kein Schaumkollaps | Kein Schaumkollaps | Kein Schaumkollaps |
| Griffeindrückweg [mm] | 0,20 | 0,56 | 0,40 | 0,40 | 0,69 |
| Weg bei 40 N, Schaumdicke 2,0 mm | | | | | |

Aus der Tabelle 2 wird ersichtlich, dass die Kunststoff-Schaummaterialien der Beispiele 1 bis 3 und des Referenzbeispiels 4 eine deutlich geringere Stauchhärte und Shore-00-Härte sowie einen höheren Griffeindrückweg, welcher in einer verbesserten Berührhaptik resultiert, aufweisen als das Vergleichsbeispiel, welches nur ein Copolymer aus Ethylen und 1-Octen aufweist, dessen 1-Octenanteil geringer als 8 Gew.-% ist. Hinsichtlich der Tiefziehfähigkeit und der Temperaturbeständigkeit verhalten sich die erfindungsgemäßen Materialien wie das Vergleichsbeispiel. Die Tiefziehfähigkeit wird nicht beeinträchtigt und bei Lagerung unter hoher Temperaturbelastung kommt es nicht zum Schaumkollaps. Besonders weiche Materialien kann man erhalten, wenn man Zusammensetzungen verwendet, die gemäß Referenzbeispiel 4 sowohl ein Copolymer aus Ethylen und 5 Gew.-% 1-Octen und ein Copolymer aus Ethylen und 19 Gew.-% 1-Octen als auch noch ein Copolymer aus Ethylen und 17 Gew.-% Vinylacetat enthalten.

## Patentansprüche

1. Kunststoff-Schaummaterial auf der Basis von Polyolefinen, hergestellt unter Einsatz von
- mindestens 50 Gew.-% zumindest eines Polypropylens und/oder zumindest eines Copolymers aus Propylen (≥ 50 Gew.-% Propylen im Copolymer) und zumindest einem anderen ungesättigten Comonomer, wobei das Polypropylen und/oder das Copolymer aus Propylen und zumindest einem anderen ungesättigten Comonomer einen Schmelzflussindex MFI (230 °C/2,16 kg) von 0,5 bis 12 g/10 min aufweist, und
- mindestens 10 Gew.-% zumindest eines Copolymers aus Ethylen und zumindest einem anderen ungesättigten Comonomer, wobei das Copolymer aus Ethylen und zumindest einem anderen ungesättigten Comonomereinen Schmelzflussindex MFI (190 °C/2,16 kg) von < 2 g/10 min aufweist und zumindest eines der Copolymere aus Ethylen und zumindest einem anderen ungesättigten Comonomer als Comonomer ein α-Olefin enthält,
- 0,3 bis 5 Gew.-%, bezogen auf das Kunststoff-Schaummaterial, inneren und/oder äußeren Gleitmitteln, wobei die inneren Gleitmittel ausgewählt sind aus Kohlenwasserstoffwachsen mit einem Schmelzbereich von 110 bis 160 °C, Alkali- und Erdalkalimetall-Salzen der Stearinsäure, der Palmitinsäure oder der Ölsäure sowie den Amiden und Estern der genannten Säuren oder Mischungen aus den genannten Substanzen und die äußeren Gleitmittel ausgewählt sind aus metallseifen-haltigen Kombinationsgleitmitteln,
und mit anschließender Vernetzung mit einer ionisierenden Strahlungsquelle, wobei das Kunststoff-Schaummaterial eine Dichte von 0,03 bis 0,2 g/cm³ und einen vernetzten Polyolefinanteil bestimmt mit Xylol-Extraktion bei einer Temperatur von 145 °C von 20-70 Gew.-% aufweist und wobei der Comonomeranteil zumindest eines der Copolymere aus Ethylen und zumindest einem anderen ungesättigten Comonomer 8 bis 40 Gew.-% beträgt.

2. Kunststoff-Schaummaterial nach Anspruch 1, **dadurch gekennzeichnet, dass** vom vernetzten Polyolefinanteil 50-95 Gew.-% auf das oder die Polypropylen(e) und/oder das oder die Propylencopolymer(e) und 5-50 Gew.-% auf das oder die Ethylencopolymer(e) entfallen.

3. Kunststoff-Schaummaterial nach zumindest einem der vorhergehenden Ansprüche, **dadurch gekennzeichnet, dass** das oder die Copolymer(e) aus Ethylen und zumindest einem anderen ungesättigten Comonomer einen Schmelzflussindex MFI (190 °C/2,16 kg) von < 1,5 g/10min, vorzugsweise ≤ 1 g/10min, aufweist bzw. aufweisen.

4. Kunststoff-Schaummaterial nach zumindest einem der vorhergehenden Ansprüche, **dadurch gekennzeichnet, dass** der Comonomeranteil zumindest eines der Copolymere aus Ethylen und zumindest einem anderen ungesättigten Comonomer 10 bis 25 Gew.-% beträgt.

5. Kunststoff-Schaummaterial nach zumindest einem der vorhergehenden, **dadurch gekennzeichnet, dass** das α-Olefin ausgewählt ist aus der Gruppe, bestehend aus 1-Octen, 1-Buten, 1-Hexen und 4-Methyl-1-Penten.

6. Kunststoff-Schaummaterial nach zumindest einem der Ansprüche 1 bis 5, **dadurch gekennzeichnet, dass** das Schaummaterial zumindest zwei Copolymere aus Ethylen und zumindest einem anderen ungesättigten Comonomer enthält, wobei das eine Copolymer als Comonomer ein α-Olefin und das andere Copolymer als Comonomer Vinylacetat enthält.

7. Kunststoff-Schaummaterial nach zumindest einem der vorhergehenden Ansprüche, **dadurch gekennzeichnet, dass** das oder die Copolymer(e) aus Ethylen und zumindest einem anderen ungesättigten Comonomer in einer kontinuierlichen Matrix des Polypropylens bzw. der Polypropylene und/oder des Copolymers oder der Copolymere aus Propylen und zumindest einem anderen ungesättigten Comonomer dispergiert ist.

8. Kunststoff-Schaummaterial nach zumindest einem der vorhergehenden Ansprüche, **dadurch gekennzeichnet, dass** es als inneres Gleitmittel Kohlenwasserstoffwachse mit einem Schmelzbereich von 110 bis 160 °C enthält, insbesondere Paraffinwachs, insbesondere auf der Basis von Polypropylen oder Polyethylen.

9. Kunststoff-Schaummaterial nach zumindest einem der vorhergehenden Ansprüche, **dadurch gekennzeichnet, dass** es ein äußeres Gleitmittel enthält und dieses Gleitmittel ein metallseifenhaltiges Kombinationsgleitmittel ist.

10. Kunststoff-Schaummaterial nach zumindest einem der vorhergehenden Ansprüche, **dadurch gekennzeichnet, dass** das oder die Gleitmittel in einer Menge von 0,3 bis 2 Gew.-% bezogen auf das Kunststoff-Schaummaterial, enthalten ist bzw. sind.

11. Verwendung des Kunststoff-Schaummaterials nach zumindest einem der vorhergehenden Ansprüche, insbesondere als tiefgezogenes, hinterpresstes oder hinterspritztes Formteil, in Flugzeugen, in Kraftfahrzeugen, für Kraftfahrzeuginnenverkleidungen oder- verkleidungsteile, insbesondere Schalttafeln oder Armaturenbretter, Säulen, Kraftfahrzeugseitenverkleidungen,-türverkleidungen, -ablagen und/oder für Kraftfahrzeugaußenverkleidungen.

## Claims

1. Plastics foam material based on polyolefins, produced with use of
- at least 50% by weight of at least one polypropylene and/or of at least one copolymer of propylene (≥ 50% by weight of propylene in the copolymer) and at least one other unsaturated comonomer, where the melt flow index MFI (230°C/2.16 kg) of the polypropylene and/or the copolymer of propylene and at least one other unsaturated comonomer is from 0.5 to 12 g/10 min, and
- at least 10% by weight of at least one copolymer of ethylene and at least one other unsaturated comonomer, where the melt flow index MFI (190°C/2.16 kg) of the copolymer of ethylene and at least one other unsaturated comonomer is < 2 g/10 min and at least one of the copolymers of ethylene and at least one other unsaturated comonomer comprises an α-olefin as comonomer,
- from 0.3 to 5% by weight, based on the plastics foam material, of internal and/or external lubricants, where the internal lubricants are selected from hydrocarbon waxes with a melting range of from 110 to 160°C, alkali metal stearates and alkaline earth metal stearates, palmitic acid or oleic acid, and also the amides and esters of the said acids and mixtures of the said substances, and the external lubricants are selected from metal-soap-containing lubricant combinations,
and with subsequent crosslinking using a source of ionizing radiation, where the density of the plastics foam material is from 0.03 to 0.2 g/cm³ and its crosslinked polyolefin content determined using xylene extraction at a temperature of 145°C is from 20 to 70% by weight, and where the comonomer content of at least one of the copolymers of ethylene and at least one other unsaturated comonomer is from 8 to 40% by weight.

2. Plastics foam material according to Claim 1, **characterized in that**, of the crosslinked polyolefin content, from 50 to 95% by weight is associated with the polypropylene(s) and/or the propylene copolymer(s) and from 5 to 50% by weight is associated with the ethylene copolymer(s).

3. Plastics foam material according to at least one of the preceding claims, **characterized in that** the melt flow index MFI (190°C/2.16 kg) of the copolymer(s) of ethylene and at least one other unsaturated comonomer is < 1.5 g/10 min, preferably ≤ 1 g/10 min.

4. Plastics foam material according to at least one of the preceding claims, **characterized in that** the comonomer content of at least one of the copolymers of ethylene and at least one other unsaturated comonomer is from 10 to 25% by weight.

5. Plastics foam material according to at least one of the preceding claims, **characterized in that** the α-olefin is selected from the group consisting of 1-octene, 1-butene, 1-hexene and 4-methyl-1-pentene.

6. Plastics foam material according to at least one of Claims 1 to 5, **characterized in that** the foam material comprises at least two copolymers of ethylene and at least one other unsaturated comonomer, where one of the copolymers comprises an α-olefin as comonomer and the other copolymer comprises vinyl acetate as comonomer.

7. Plastics foam material according to at least one of the preceding claims, **characterized in that** the copolymer(s) of ethylene and at least one other unsaturated comonomer has/have been dispersed in a continuous matrix of the polypropylene(s) and/or of the copolymer(s) of propylene and at least one other unsaturated comonomer.

8. Plastics foam material according to at least one of the preceding claims, **characterized in that** it comprises, as internal lubricant, hydrocarbon waxes with a melting range of from 110 to 160°C, in particular paraffin wax, in particular based on polypropylene or polyethylene.

9. Plastics foam material according to at least one of the preceding claims, **characterized in that** it comprises an external lubricant and this lubricant is a metal-soap-containing lubricant combination.

10. Plastics foam material according to at least one of the preceding claims, **characterized in that** the quantity present of the lubricant(s) is from 0.3 to 2% by weight, based on the plastics foam material.

11. Use of the plastics foam material according to at least one of the preceding claims, in particular as thermoformed or in-mould-coated moulding, in aircraft, in motor vehicles, for motor-vehicle-interior cladding or corresponding cladding parts, in particular dashboards and electrical control panels, columns, motor-vehicle side cladding, motor-vehicle door cladding, motor-vehicle parcel shelves and/or motor-vehicle-exterior cladding.

## Revendications

1. Matière plastique expansée à base de polyoléfines, fabriquée en utilisant
- au moins 50 % en poids d'au moins un polypropylène et/ou d'au moins un copolymère de propylène (≥ 50 % en poids de propylène dans le copolymère) et d'au moins un autre comonomère insaturé, le polypropylène et/ou le copolymère de propylène et d'au moins un autre comonomère insaturé présentant un indice de fluidité à chaud MFI (230 °C/2,16 kg) de 0,5 à 12 g/10 min, et
- au moins 10 % en poids d'au moins un copolymère d'éthylène et d'au moins un autre comonomère insaturé, le copolymère d'éthylène et d'au moins un autre comonomère insaturé présentant un indice de fluidité à chaud MFI (190 °C/2,16 kg) < 2 g/10 min, et au moins un des copolymères d'éthylène et d'au moins un autre comonomère insaturé contenant une α-oléfine en tant que comonomère,
- 0,3 à 5 % en poids, par rapport à la matière plastique expansée, de lubrifiants internes et/ou externes, les lubrifiants internes étant choisis parmi les cires hydrocarbonées ayant une plage de fusion de 110 à 160 °C, les sels de métaux alcalins et alcalino-terreux de l'acide stéarique, de l'acide palmitique ou de l'acide oléique, ainsi que les amides et les esters des acides mentionnés ou les mélanges des substances mentionnées, et les lubrifiants externes étant choisis parmi les lubrifiants combinés contenant des savons métalliques,
et avec réticulation ultérieure avec une source de rayonnement ionisant, la matière plastique expansée présentant une densité de 0,03 à 0,2 g/cm³ et une fraction de polyoléfine réticulée déterminée par extraction au xylène à une température de 145 °C de 20 à 70 % en poids, et la proportion de comonomères d'au moins un des copolymères d'éthylène et d'au moins un autre comonomère insaturé étant de 8 à 40 % en poids.

2. Matière plastique expansée selon la revendication 1, **caractérisée en ce que** 50 à 95 % en poids de la fraction de polyoléfine réticulée correspond au ou aux polypropylènes et/ou au ou aux copolymères de propylène et 5 à 50 % en poids correspond au ou aux copolymères d'éthylène.

3. Matière plastique expansée selon au moins l'une quelconque des revendications précédentes, **caractérisée en ce que** le ou les copolymères d'éthylène et d'au moins un autre comonomère insaturé présentent un indice de fluidité à chaud MFI (190 °C/2,16 kg) < 1,5 g/10 min, de préférence ≤ 1 g/10 min.

4. Matière plastique expansée selon au moins l'une quelconque des revendications précédentes, **caractérisée en ce que** la proportion de comonomères d'au moins un des copolymères d'éthylène et d'au moins un autre comonomère insaturé est de 10 à 25 % en poids.

5. Matière plastique expansée selon au moins l'une quelconque des revendications précédentes, **caractérisée en ce que** l'α-oléfine est choisie dans le groupe constitué par le 1-octène, le 1-butène, le 1-hexène et le 4-méthyl-1-pentène.

6. Matière plastique expansée selon au moins l'une quelconque des revendications 1 à 5, **caractérisée en ce que** la matière expansée contient au moins deux copolymères d'éthylène et d'au moins un autre comonomère insaturé, un des copolymères contenant une α-oléfine en tant que comonomère et l'autre copolymère contenant de l'acétate de vinyle en tant que comonomère.

7. Matière plastique expansée selon au moins l'une quelconque des revendications précédentes, **caractérisée en ce que** le ou les copolymères d'éthylène et d'au moins un autre comonomère insaturé sont dispersés dans une matrice continue du polypropylène ou des polypropylènes et/ou du copolymère ou des copolymères de propylène et d'au moins un autre comonomère insaturé.

8. Matière plastique expansée selon au moins l'une quelconque des revendications précédentes, **caractérisée en ce qu'**elle contient en tant que lubrifiant interne des cires hydrocarbonées ayant une plage de fusion de 110 à 160 °C, notamment une cire de paraffine, notamment à base de polypropylène ou de polyéthylène.

9. Matière plastique expansée selon au moins l'une quelconque des revendications précédentes, **caractérisée en ce qu'**elle contient un lubrifiant externe et ce lubrifiant est un lubrifiant combiné contenant des savons métalliques.

10. Matière plastique expansée selon au moins l'une quelconque des revendications précédentes, **caractérisée en ce que** le ou les lubrifiants sont contenus en une quantité de 0,3 à 2 % en poids par rapport à la matière plastique expansée.

11. Utilisation de la matière plastique expansée selon au moins l'une quelconque des revendications précédentes, notamment en tant que pièce moulée emboutie, surpressée ou surmoulée, dans des avions, dans des automobiles, pour des habillages ou parties d'habillages intérieurs d'automobiles, notamment tableaux de commande ou tableaux de bord, colonnes, habillages latéraux, habillages de portes, vide-poches d'automobiles et/ou pour des habillages extérieurs d'automobiles.
